Europäisches Patentamt

European Patent Office

Office européen des brevets

(11) Publication number: **0 086 602**
A1

# EUROPEAN PATENT APPLICATION

(21) Application number: 83300562.2

(22) Date of filing: 04.02.83

(51) Int. Cl.³: **F 02 M 31/12**

(30) Priority: 05.02.82 GB 8203379
11.03.82 GB 8207158

(43) Date of publication of application: 24.08.83
Bulletin 83/34

(84) Designated Contracting States: **AT BE DE FR GB IT NL SE**

(71) Applicant: **Carle-Hay, Nigel, Langshaw House Beattock Road, Moffat Dumfriesshire Scotland (GB)**

(72) Inventor: **Carle-Hay, Nigel, Langshaw House Beattock Road, Moffat Dumfriesshire Scotland (GB)**

(74) Representative: **McCallum, William Potter et al, Cruikshank & Fairweather 19 Royal Exchange Square, Glasgow G1 3AE Scotland (GB)**

(54) Apparatus for controlling the temperature of fuel supplied to a vehicle engine or the like.

(57) The invention is a method and apparatus for preventing the freezing of liquid fuel in low temperature conditions when said fuel is being supplied to a fuel-burning unit such as a vehicle engine or boiler of a heating system. The apparatus comprises a chamber (3) provided in the supply line between a tank (1) and the fuel burning unit and into which a small amount of fuel can be continuously fed and heated by means of an electric immersion coil (5) so that it can then be supplied at a higher temperature to the fuel burning unit.

EP 0 086 602 A1

APPARATUS FOR CONTROLLING THE TEMPERATURE OF
FUEL SUPPLIED TO A VEHICLE ENGINE OR THE LIKE

This invention relates to apparatus for controlling the temperature of fuel, particularly diesel fuel, supplied to a vehicle engine or other liquid fuel burning apparatus.

In low temperature conditions e.g. at temperatures of around -10°C to -20°C, a serious problem commonly arises with motor vehicles driven by diesel engines in that the diesel fuel "freezes" in the tank and fuel supply lines to an extent that the fuel supply to the engine is cut off. By the term "freezes" it is not necessarily meant that the diesel fuel actually solidifies but it becomes more viscous and waxy crystals form so that the fuel cannot pass through the various filters provided in the fuel supply lines.

Frequently a diesel engine will start and run for a short time in freezing conditions due to unfrozen fuel present in the engine and unfrozen portions of the fuel line. When such unfrozen fuel is used and the fuel pump mechanism of the vehicle attempts to pump frozen fuel from the tank to the engine, it fails to do so and the engine stops. This situation often results in the vehicle having to be abandoned on an open road where it can become a hazard to other road users.

Attempts have been made to overcome the problem of freezing of diesel fuel by the provision of chemical additives to the diesel fuel in the vehicle fuel tank in order to lower the freezing point of the fuel. An alternative method has been to heat the fuel tank. Such methods are expensive and in the case of fuel additives can conceivably reduce the efficiency of the engine.

Similar problems can also arise in other liquid fuel burning apparatus e.g. domestic or industrial oil-fired central heating systems and the present invention is applicable to such systems.

An object of the present invention is to provide apparatus for incorporation in fuel systems which will obviate or mitigate the problem of freezing fuel in a simple and efficient manner.

According to the present invention, there is provided apparatus for controlling the temperature of fuel supplied to a fuel burning unit comprising a chamber adapted to receive a limited amount of fuel at a low temperature from a source, heating means in said chamber for heating the low temperature fuel to a higher temperature, and outlet means from the chamber whereby the fuel at a higher temperature can be supplied to the fuel burning unit.

Preferably the chamber is of a capacity which is substantially smaller than that of the source.

According to a further aspect of the present invention there is provided a system of supplying fuel to a fuel-burning unit, said system comprising a source of fuel and pump means for feeding the fuel from the source to the fuel-burning unit characterised in that there is provided in the pipe line between the source and the fuel burning unit apparatus for controlling the temperature of fuel supplied to the unit, said apparatus comprising a chamber for receiving an amount of fuel at a low temperature from the source, heating means in said chamber for heating the low temperature fuel to a higher temperature, and outlet means from the chamber whereby the heated fuel can be supplied to the fuel burning unit.

According to yet another aspect of the present invention there is provided a method of controlling the temperature of fuel supplied to a fuel burning unit from a source characterised in that there is provided at a location in the supply line between the source and the unit a chamber for continuously receiving a limited amount of fuel at a low temperature from said source and heating said amount of fuel for passage to the fuel burning unit.

An embodiment of the present invention will now be described, by way of example, with reference to the accompanying diagrammatic drawing.

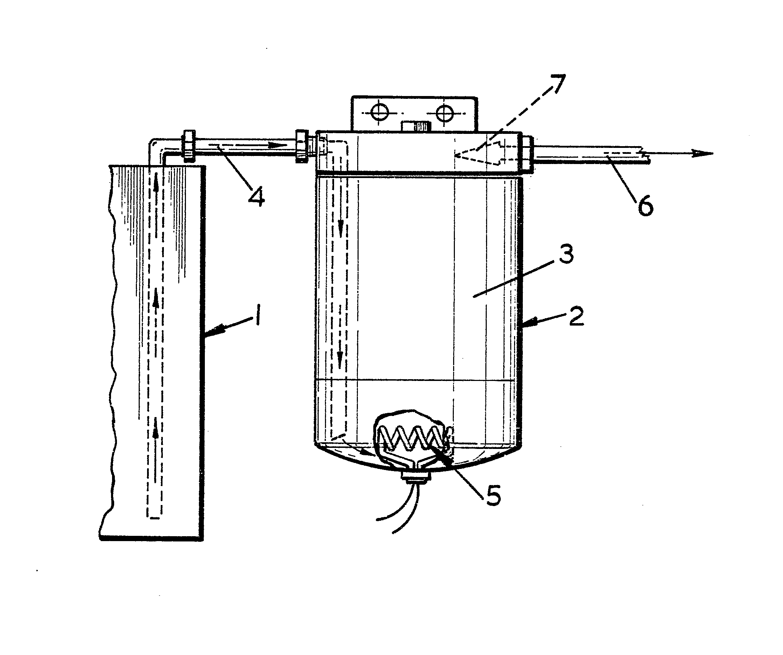

Referring to the drawing, a vehicle driven by a diesel engine incorporates a fuel source in the form of a main fuel tank 1 within which is stored a supply of diesel fuel. A pumping mechanism (not shown) of known form, and which may, for example, include a lift pump and injection pump, normally pumps diesel fuel from the tank to the engine.

The apparatus of the present invention comprises a container 2 of any suitable material such as "Perspex" (Registered Trade Mark). The container 2 defines a chamber 3 therewithin through which fuel can be drawn from the tank 1 by means of an interconnecting pipe 4 into the bottom of the chamber 3. Projecting into the bottom of the chamber 3 from the base of the container 2 is a 140 watt electric immersion coil 5 which, when energised, serves to heat fuel flowing into the bottom of the chamber 3 from the pipe 4. An outlet pipe 6 is connected through the pumping mechanism to the engine so that fuel from the container 2 can be supplied thereto. The end of the outlet pipe which is located within the container 2 is fitted with a fine brass gauze filter 7.

It will be noted that fuel entering the pipe 4 in the fuel tank 1 does not pass through a filter so that the passage of fuel into the pipe 4 is as unrestricted as possible.

It has been found suitable for the container 2 to have a capacity of about ½ pint.

If a vehicle having the above-described apparatus fitted thereto encounters low-temperature conditions sufficient to "freeze" the diesel fuel in the tank 1, the immersion heating coil 5 is energised for approximately 3 or 4 minutes prior to starting the engine. The fuel in the container 2 is thus heated to a temperature sufficient to ensure that the fuel is fed in a fluid

0036602

condition to the engine.   As the fuel is burned, the pumping mechanism is sufficient to pump cold fuel continuously from the tank 1, through the unrestricted pipe 4 and into the bottom of the chamber 3 where it remains sufficiently long to be heated by the coil 5. The warm fuel then passes out through the outlet pipe 6 to the engine.

In this way a continuous supply of warm fuel is supplied to the engine.   It will be appreciated that by virtue of the present invention, only a small amount of fuel requires to be heated at a given time so that the process is much more efficient than one which involves heating the whole of the fuel tank.

Although the invention has been described above with particular reference to motor vehicles powered by a diesel engine, it will be readily appreciated that it can be used in other vehicles such as railway engines, military tanks or the like.   In addition it can be used for fuels other than diesel fuel.   Furthermore in a situation where there is a long run of fuel line between the fuel tank and the engine, a plurality of containers in accordance with the invention can be incorporated at spaced intervals along the fuel line.

In a further application of the present invention the apparatus, for example as shown in the drawing, is incorporated in a domestic or industrial oil-fired central heating system.   In this instance, the immersion heating unit of the invention is fitted into the fuel supply system in advance of the boiler of the central heating system in a manner similar to the fitting thereof in relation to a vehicle engine.   It is considered that the only modification which requires to be made is that the inlet pipe to the unit from the fuel supply tank is of a relatively large diameter e.g. one inch.   This will permit waxy, partially frozen fuel to gain access to the immersion heating unit in low temperature conditions.

It is envisaged that when used for a heating system, the unit of the present invention can be continuously heated by means of the immersion coil.

When the present invention is used in relation to a vehicle engine, it is considered that fuel economy of the engine is improved.

0086602

CLAIMS:

1.  Apparatus for controlling the temperature of fuel supplied to a fuel-burning unit charcterised in that there is provided a chamber (3) adapted to receive an amount of fuel at a low temperature from a source (1), heating means (5) in said chamber (3) for heating the low temperature fuel to a higher temperature, and outlet means (6) from the chamber (3) whereby the heated fuel can be supplied to the fuel burning unit.

2.  Apparatus as claimed in claim 1, wherein the heating means (5) is an electric immersion coil.

3.  Apparatus as claimed in claim 1 or 2, in which that end of the outlet means (6) connected to the chamber (3) is provided with a filter.

4.  Apparatus as claimed in any preceding claim, in which fuel is supplied to the chamber (3) by means of an unrestricted inlet pipe (4) arranged to discharge into the lower part of said chamber.

5.  A system of supplying fuel to a fuel-burning unit, said system comprising a source of fuel and pump means for feeding the fuel from the source to the fuel-burning unit characterised in that there is provided in the pipe line between the source and the fuel burning unit apparatus for controlling the temperature of fuel supplied to the unit, said apparatus comprising a chamber (3) for receiving an amount of fuel at a low temperature from the source (1), heating means (5) in said chamber (3) for heating the low temperature fuel to a higher temperature, and outlet means from the chamber (3) whereby the heated fuel can be supplied to the fuel burning unit.

6. A system as claimed in claim 5, in which the heating means (5) is an electric immersion coil.

7. A system as claimed in claim 5 or 6, in which that end of the outlet means (6) connected to the chamber (3) is provided with a filter.

8. A system as claimed in any of claims 5 to 7, in which fuel is supplied to the chamber (3) by means of an unrestricted pipe (4) arranged to discharge into the lower part of said chamber.

9. A system as claimed in any of claims 5 to 8, in which the fuel burning unit is a vehicle engine.

10. A system as claimed in any of claims 5 to 8, in which the fuel burning unit is a boiler of a heating system.

11. A system as claimed in any of claims 5 to 10, in which a plurality of apparatus for controlling the temperature of fuel are disposed at spaced intervals in the fuel supply line between the source and the fuel burning unit.

12. A method of controlling the temperature of fuel supplied to a fuel burning unit from a source characterised in that there is provided at a location in the supply line between the source (1) and the unit a chamber (3) for continuously receiving a limited amount of fuel at a low temperature from said source and heating said amount of fuel for passage to the fuel burning unit.

13. A method as claimed in claim 12, comprising heating said limited amount of fuel by means of an electric immersion coil (5).

14. A method as claimed in claim 12 or 13, in which the source is a tank.

0086602

15.    A method as calimed in any of claims 12 to 14, in which the fuel burning unit is a vehicle engine.

16.    A method as claimed in any of claims 12 to 14, in which the fuel-burning unit is a boiler of a heating system.

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 031 992  (GROS)<br><br>* Page 1, lines 5-8; page 1, line 108 - page 2, line 1 * | 1,2,4, 5,6,8, 9,10, 12,13, 14,15, 16 | F 02 M  31/12 |
| X | FR-A- 885 644  (DALIGANT)<br><br>* Page 1, lines 26-55; figures 1-3 * | 1,2,3, 4,5,7, 8,12, 13 | |
| X | US-A-3 235 084  (KING)<br><br>* Column 1, line 55 - column 2, line 36; figure 1 * | 1,2,5, 6,9,12 ,13,15 | TECHNICAL FIELDS SEARCHED (Int. Cl. ³)<br><br>F 02 M |
| X | FR-A-2 256 323  (ROCHETTE)<br><br>* Page 2, lines 16-34 * | 1,4,5, 8,12, 14 | |
| X | US-A-1 532 189  (LAMONT)<br><br>* Page 1, lines 89-108; figure 1 * | 1,5,9, 12,13, 15 | |

The present search report has been drawn up for all claims

| Place of search<br>THE HAGUE | Date of completion of the search<br>25-04-1983 | Examiner<br>TATUS W.D. |
|---|---|---|